(19) Europäisches Patentamt
European Patent Office
Office européen des brevets

(11) **EP 3 921 282 B1**

(12) **EUROPÄISCHE PATENTSCHRIFT**

(45) Veröffentlichungstag und Bekanntmachung des Hinweises auf die Patenterteilung:
**21.05.2025   Patentblatt 2025/21**

(21) Anmeldenummer: **19714411.6**

(22) Anmeldetag: **27.03.2019**

(51) Internationale Patentklassifikation (IPC):
*C01B 33/037* [(2006.01)]

(52) Gemeinsame Patentklassifikation (CPC):
**C01B 33/037;** C01P 2006/80

(86) Internationale Anmeldenummer:
**PCT/EP2019/057772**

(87) Internationale Veröffentlichungsnummer:
**WO 2020/192913 (01.10.2020 Gazette 2020/40)**

(54) **VERFAHREN ZUR HERSTELLUNG VON TECHNISCHEM SILICIUM**

METHOD FOR PRODUCING TECHNICAL SILICON

PROCÉDÉ DE PRODUCTION DE SILICIUM TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.12.2021   Patentblatt 2021/50**

(73) Patentinhaber: **Wacker Chemie AG**
**81671 München (DE)**

(72) Erfinder:
• **RIMBÖCK, Karl-Heinz**
**84431 Heldenstein (DE)**
• **MAUTNER, Konrad**
**84489 Burghausen (DE)**

(74) Vertreter: **Belz, Ferdinand et al**
**Wacker Chemie AG**
**Gisela-Stein-Straße 1**
**81671 München (DE)**

(56) Entgegenhaltungen:
**EP-A1- 0 699 625     CN-A- 109 052 407**

• **GRIBOV B G ET AL: "Preparation of High-Purity Silicon for Solar Cells", INORGANIC MATERIALS, vol. 39, no. 7, 2003, PLENUM PUBLISHING CO., NEW YORK, NY, US, pages 653 - 662, XP002597927, ISSN: 0020-1685, DOI: 10.1023/A:1024553420534**
• **ALEKSANDAR M. MITRASINOVI, RYAN D'SOUZA, TORSTEIN A. UTIGARD: "Impurity removal and overall rate constant during low pressure treatment of liquid silicon", JOURNAL OF MATERIALS PROCESSING TECHNOLOGY, vol. 212, no. 1, January 2012 (2012-01-01), pages 78 - 82, XP028103135, DOI: 10.1016/ j.jmatprotec.2011.08.006**

**Beschreibung**

Die Erfindung betrifft ein Verfahren zur Herstellung von technischem Silicium aus einer partikulären Rohstoffmischung aus Siliciummetall-haltigem Material und einem partikulären Mediator durch Erhitzen, wobei sich eine flüssige Siliciummetall-Phase bildet.

Silicium findet in technischer Qualität, (Si-Gehalt <99,9 Masse-%, auch als technisches Silicium bezeichnet) heute v.a. Anwendung in siliconthermischen Prozessen, in der Metallgewinnung, als Desoxidationsmittel bei der Stahlherstellung und dient als Legierungsbestandteil von Gusslegierungen des Aluminiums, Kupfers, Titans und Eisens sowie als Ausgangsmaterial für chemische Verbindungen.

Die Silicium-herstellenden und/oder -verarbeitenden Industrien erzeugen große Mengen an Silicium-haltigen Ab- und/oder Nebenanfällen, die für den jeweiligen Produzenten mit teils hohen Kosten für Verbringung oder Entsorgung verbunden sind. Hierdurch gehen erhebliche Mengen metallischen Siliciums verloren.

CN109052407A nennt ein mehrstufiges Verfahren, das zunächst Silicium-Abfall aufbereitet und dieser aufbereitete Silicium-Abfall durch Versetzen mit einem Schlackebildner sowie anschließendem Umschmelzen im Vakuum zu Silicium höherer Reinheit umgesetzt wird. Nachteilig hierbei sind der Einsatz Halogen-haltiger Flussmittel sowie die Notwendigkeit, eine Schlacke-bildende Komponentenmischung mit bestimmten Mischungsverhältnissen der Einzelkomponenten vor dem Einsatz im beschriebenen Verfahren gezielt herstellen zu müssen. Letzteres stellt einen zusätzlichen Aufwand dar. Halogen-haltige Flussmittel können unter den Betriebsbedingungen flüchtige Halogen-Verbindungen freisetzen, womit eine Reihe von Nachteilen und Gefährdungspotentialen einhergeht (bspw. Korrosion von Anlagenteilen, Umwelt- und Gesundheitsschädigung) und damit ein zusätzlicher technischer Aufwand, um diese Effekte zu beherrschen. Derartige technische Lösungen vermindern die Wirtschaftlichkeit des Verfahrens.

CN 109 052 407 A beschreibt ein Verfahren zur Wiederverwertung und Reinigung von Siliziumschneidabfällen.

EP 0 699 625 A1 beschreibt ein Verfahren zur Entfernung von Verunreinigungen aus geschmolzenem Silizium durch Behandlung von geschmolzenem Silizium, das in einem Behälter enthalten ist, mit einer Schlacke, die die Fähigkeit hat, die Verunreinigungen, insbesondere Bor, aus geschmolzenem Silizium zu entfernen. Die Schlacke wird dem geschmolzenen Silizium kontinuierlich oder im Wesentlichen kontinuierlich zugeführt und dann kontinuierlich oder im Wesentlichen kontinuierlich inaktiviert oder aus der Siliziumschmelze entfernt, sobald ein Gleichgewicht zwischen der Schlacke und dem geschmolzenen Silizium in Bezug auf die zu entfernenden Verunreinigungen oder Elemente erreicht ist.

Die Aufgabe der vorliegenden Erfindung bestand darin, ein wirtschaftliches Verfahren bereitzustellen, das die Herstellung von Silicium technischer Qualität (<99,9 Masse-% Si) ausgehend von Silicium-haltigen Ab- und/oder Nebenanfällen ermöglicht und die Nachteile des Verfahrens der CN109052407A zu überwinden.

Gegenstand der Erfindung ist ein Verfahren zur Herstellung von technischem Silicium,

bei dem eine partikuläre Rohstoffmischung, die partikuläres Siliciummetall-haltiges Material und einen partikulären Mediator enthält, welcher mindestens eines der Elemente C, O, Al, Ca und Si enthält,
auf mindestens 1490 °C erhitzt wird, wobei sich eine flüssige Siliciummetall-Phase bildet,
und die flüssige Siliciummetall-Phase zum Erstarren gebracht wird,
wobei die partikuläre Rohstoffmischung durch eine Kennzahl K beschrieben ist, wobei K einen Wert von 0,000 bis 60 aufweist und wie folgt berechnet wird:

$$K = \frac{m(SiM) \cdot d50(SiM) + m(Med) \cdot d50(Med)}{m(SiM) + m(Med)} \cdot \varphi \qquad \text{(Gleichung 1)}$$

wobei

m(SiM)    Masse des Siliciummetall-haltigen Materials in der Charge
m(Med)    Masse des Mediators in der Rohstoffmischung
$d_{50,SiM}$    Partikelgröße (Durchmesser) bei 50% des Massendurchgangs der Sieblinie des Siliciummetall-haltigen Materials,
$d_{50,Med}$    Partikelgröße (Durchmesser) bei 50% des Massendurchgangs der Sieblinie des Mediators,
$\varphi$    mittlere Porosität des Siliciummetall-haltigen Materials

wobei das Silicium-haltige Material ohne weitere Reinigungsschritte verwendet wird,
wobei die Partikel des Siliciummetall-haltigen Materials eine mittlere Partikelgröße $d_{50,SiM}$ von 0,1 bis 100 mm aufweisen und wobei die Partikel des Mediators eine mittlere Partikelgröße $d_{50,Med}$ von 0,1 bis 100 mm aufweisen.

Die Wiedergewinnung des Siliciummetall-Anteils aus den Siliciummetall-haltigen Materialien trägt zu einer wirtschaftlicheren und nachhaltigeren Herstellung von technischem Silicium bei.

Der größte Vorteil des erfindungsgemäßen Verfahrens liegt im Vergleich zu bekannten Prozessen in der Möglichkeit, die metallischen Silicium-Anteile von Siliciummetall-haltigen Materialien ohne chemische Zusätze zu recyceln. Somit ist ein ökologischer und ökonomischer Vorteil gegeben. Mit Fokus auf die Kreislaufwirtschaft würde ohne Rückgewinnung des Siliciums ein hoher Anteil dieses Rohstoffs für die weitere Verwertung nicht mehr zur Verfügung stehen. Durch das Verfahren erfolgt somit eine bessere Verwertung des technologisch relevanten Siliciums.

Das hergestellte technische Silicium weist vorzugsweise ein Si-Gehalt von mindestens 90 Masse-%, besonders bevorzugt mindestens 95 Masse-%, insbesondere mindestens 97 Masse-% auf.

Vorzugsweise weist die Kennzahl K einen Wert von 0,01 bis 40, besonders bevorzugt 0,01 bis 30, insbesondere von 0,03 bis 10 auf.

Die Bestandteile der partikulären Rohstoffmischung können zusammen oder getrennt voneinander in den Ofen gegeben werden. Die Zugabe kann dabei manuell oder automatisiert erfolgen. Die partikuläre Rohstoffmischung setzt sich unter den Betriebsbedingungen zu einem Gemisch um, das als Ofenladung bezeichnet wird. In der Ofenladung bildet sich durch das Erhitzen metallisches Silicium in flüssiger Form, welches eine Siliciummetall-Phase ausbildet.

Erfindungsgemäß weist die partikuläre Rohstoffmischung folgende Eigenschaften auf:

die partikuläre Rohstoffmischung wird bevorzugt als Partikelmischung eingesetzt, wobei bevorzugt

die Partikel des Siliciummetall-haltigen Materials eine mittlere Partikelgröße $d_{50,SiM}$ von vorzugsweise 0,5 bis 75 mm, besonders bevorzugt von 1 bis 50 mm, insbesondere von 5 bis 30 mm aufweisen;

die Partikel des Siliciummetall-haltigen Materials eine mittlere Porosität der Partikel von vorzugsweise 0 bis 0,6, besonders bevorzugt von 0,05 bis 0,4, ganz besonders bevorzugt von 0,1 bis 0,35, insbesondere von 0,15 bis 0,3 aufweisen;

die Partikel des Mediators eine mittlere Partikelgröße $d_{50,Med}$ von bevorzugt 1 bis 75 mm, besonders bevorzugt von 2 bis 50 mm, insbesondere von 5 bis 30 mm aufweisen;

das Massenverhältnis m (Siliciummetall-haltiges Material) / m (Mediator) bevorzugt Werte von 0,1 bis 10, besonders bevorzugt von 0,2 bis 8, ganz besonders bevorzugt von 0,4 bis 6, insbesondere von 0,5 bis 5 annimmt.

Das Siliciummetall-haltige Material enthält im trockenen Zustand bevorzugt mindestens 20 Masse-%, besonders bevorzugt mindestens 30 Masse-%, ganz besonders bevorzugt mindestens 40 Masse-%, insbesondere mindestens 45 Masse-% metallisches Silicium.

Vorzugsweise handelt es sich bei dem Siliciummetall-haltigen Material um Siliciumreste, die vorzugsweise ausgewählt werden aus Nebenprodukten oder Abfällen, der Silicium-herstellenden oder -verarbeitenden Industrien, z.B.

- die bei der Herstellung oder bei der mechanischen Bearbeitung von Silicium, wie poly-, multi- oder einkristallinem Silicium anfallen;
- die bei der Herstellung von granuliertem Siliciummetall beispielsweise in Wirbelschicht-, Zentrifugal-, Gaszerstäubungs-, Wassergranulat-Verfahren anfallen;
- die bei der Herstellung von Silicium technischer Qualität mittels carbothermischer Reduktion von $SiO_2$ anfallen;
- die bei der mechanischen Bearbeitung und gegebenenfalls einem oder mehreren Klassierungsverfahren von Silicium technischer Qualität anfallen. Bei der mechanischen Bearbeitung kann es sich insbesondere um Brechen und/oder Mahlen handeln. Typische Klassierungsverfahren sind beispielsweise Sieben und/oder Sichten;
- die bei der Herstellung von Silanen anfallen. Beispielsweise kann es sich hierbei um neutralisierte Kontaktmasse aus Chlorsilanreaktoren handeln, vor und/oder nach einer Rückgewinnung von Cu; insbesondere der Prozesse Müller-Rochow Direktsynthese, Hydrochlorierung oder Niedertemperaturkonvertierung zur Herstellung von Silanen. Eine Aufreinigung dieser Siliciumreste vor dem Einsatz im erfindungsgemäßen Verfahren ist üblicherweise nicht erforderlich, d.h. die Silicium-haltigen Materialien werden ohne weitere Reinigungsschritte verwendet.

Um gezielt bestimmte Werte für Kennzahl K einzustellen wird das Siliciummetall-haltige Material vorzugsweise agglomeriert, beispielsweise durch Pelletieren, Brikettieren, Sintern und getrocknet.

Bevorzugt wird der Mediator einem Zerkleinerungs- (z.B. Mahlen, Brechen), Klassierungs- (z.B. Sieben, Sichten) und/oder Agglomerisationsverfahren (z.B. Pelletieren, Brikettieren, Sintern) unterzogen, um den gewünschten Wert für Kennzahl K zu erhalten.

Gemäß einer bevorzugten Ausführungsform wird die Partikelmischung der partikulären Rohstoffmischung so gewählt, sodass die mittlere Partikelgröße des Silicium-haltigen Materials $d_{50,SiM}$ größer ist als die mittlere Partikelgröße des Mediators $d_{50,Med}$.

Gemäß einer weiteren bevorzugten Ausführungsform weist die partikuläre Rohstoffmischung einen Wasser-Gehalt von maximal 5 Masse-%, bevorzugt von maximal 1 Masse-%, besonders bevorzugt von maximal 1000 Masse-ppm, insbesondere von maximal 500 Masse-ppm auf.

Vorzugsweise enthält der partikuläre Mediator, die Elemente O, Si und Ca. Vorzugsweise enthält der partikuläre Mediator mindestens 10 Masse-%, besonders bevorzugt mindestens 20 Masse-% O. Vorzugsweise enthält der partikuläre Mediator mindestens 5 Masse-%, besonders bevorzugt mindestens 10 Masse-% Ca. Vorzugsweise enthält der partikuläre Mediator mindestens 15 Masse-%, besonders bevorzugt mindestens 20 Masse-% Si. Vorzugsweise enthält der partikuläre Mediator mindestens 1 Masse-%, besonders bevorzugt mindestens 3 Masse-% Al.

Der partikuläre Mediator enthält vorzugsweise höchstens 1 Masse-%, besonders bevorzugt höchstens 0,1 Masse-% Halogen. Der partikuläre Mediator enthält vorzugsweise höchstens 0,05 Masse-%, besonders bevorzugt höchstens 0,01 Masse-% F.

Es kann ferner bevorzugt sein, die partikuläre Rohstoffmischung und/oder die Ofenladung gezielt mit Elementen zu dotieren. Dies kann beispielsweise angezeigt sein, wenn das zu herzustellende technische Silicium für den Einsatz in der Synthese von Chlorsilanen vorgesehen ist. Hierbei handelt es sich um eines oder mehrere der Elemente aus der Gruppe mit Al, Cu, Sn, Zn, O und P oder eine Verbindung oder mehrere Verbindungen dieser Elemente oder Mischungen dieser Elemente und Verbindungen.

Der für das Erhitzen der partikulären Rohstoffmischung erforderliche Energieeintrag kann auf beliebige Weise erfolgen. Bevorzugt erfolgt der Energieeintrag elektrisch. Er kann beispielsweise mittels Induktionstechnik oder mit Widerstandserwärmung erfolgen.

In einer bevorzugten Ausführungsform handelt es sich bei dem Ofen, bei welchem der notwendige Energieeintrag zur Verflüssigung der Rohstoffmischung elektrisch erfolgt, um einen Industrieofen, insbesondere um einen Standofen, wie Induktionsofen, insbesondere um einen Vakuuminduktionsofen.

Die partikuläre Rohstoffmischung wird vorzugsweise auf mindestens 1500 °C, besonders bevorzugt mindestens 1520°C erhitzt.

Die partikuläre Rohstoffmischung wird vorzugsweise mindestens 30 min, besonders bevorzugt 1 h bei der Temperatur gehalten, bei der sich die flüssige Siliciummetall-Phase bildet.

Durch Dichteunterschiede trennt sich die Siliciummetall-Phase vom Rest der verflüssigten Rohstoffmischung. Aufgrund der geringeren Dichte sammelt sich die Siliciummetall-Phase an der Oberfläche der verflüssigten Rohstoffmischung.

Nach erfolgter Phasentrennung wird das Siliciummetall durch Abkühlen zum Erstarren gebracht. Dies kann an einer gekühlten Oberfläche oder in einem gekühlten Medium erfolgen. Bei Ersterem wird das erstarrte Siliciummetall entweder mechanisch von der gekühlten Oberfläche oder durch Erwärmen der gekühlten Oberfläche durch Aufschmelzen entfernt, bei Zweiterem wird das Siliciummetall üblicherweise granuliert beispielsweise durch sog. Atomisierungstechniken. Die Einrichtungen mit der gekühlten Oberfläche bzw. dem gekühlten Medium können vielfach eingesetzt werden.

Das Verfahren kann an Umgebungsluft, unter Schutzgas, das beispielsweise ausgewählt wird aus Stickstoff und Argon, sowie unter vermindertem Druck durchgeführt werden. Des Weiteren kann dieses Verfahren sowohl in Batch- als auch in semi- sowie vollkontinuierlicher Form durchgeführt werden. Die verbleibende Schlacke kann als Mediator für mehrere Schmelzvorgänge im Behälter verbleiben, sodass neue partikuläre, Siliciummetall-haltige Rohstoffmischungen nachchargiert werden können.

Die Bestimmung der Partikelgrößenverteilung kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen. Für Mischungen partikulärer Stoffe, die Korndurchmesser von überwiegend > 0,1 mm aufweisen, werden üblicherweise Siebanalysen durchgeführt, um die Partikelmischung zu charakterisieren. Die Bestimmung der Korngrößenverteilung mittels Siebanalyse erfolgt nach DIN 66165. Eine Berechnung von mittleren Partikelgrößen/-durchmessern aus Partikelgrößenverteilungen kann nach DIN ISO 9276-2 erfolgen.

Die Gesamtporosität eines Stoffes setzt sich zusammen aus der Summe der Hohlräume, die untereinander und mit der Umgebung in Verbindung stehen (offene Porosität; hier, in der vorliegenden Erfindung als "Porosität" bezeichnet) und den nicht miteinander verbundenen Hohlräumen (geschlossene Porosität). Die Porositätsmessungen können nach dem Archimedischen Prinzip erfolgen und gemäß ASTM C373-88 durchgeführt werden. Ferner kann die Porosität eines Materials durch Berechnung aus der absoluten und der apparenten Dichte erfolgen. Die absolute und die apparente Dichte können mittels Gewichtsmessung und Volumenmessung mittels Gaspyknometern bestimmt werden. Die Bestimmung der Dichte fester Stoffe wird in DIN 66137-2:2019-03 beschrieben.

Die Temperatur im Verfahren kann mittels Pyrometern erfolgen; beispielsweise mittels Quotientenpyrometern.

Die Bestimmung der chemischen Zusammensetzung der Bestandteile der partikulären Rohstoffmischung kann beispielsweise mittels Röntgenfluoreszenzanalyse, quantitativer Röntgendiffraktion mit einem internen Standard und/oder ICP-OES erfolgen.

**Beispiele**

In einem Vakuuminduktionsofen wurde ein hochreiner Grafittiegel mit Chargen verschiedener Werte für K zu je

EP 3 921 282 B1

100 kg befüllt und auf eine Temperatur von ca. 1600 °C erhitzt. Nach einsetzender Phasentrennung, wobei sich eine Silicium-Oberfläche ausbildete, wurde die Betriebstemperatur für 3 h bei ca. 1550 °C gehalten. Darauffolgend, wurde das Silicium dekantiert, in eine Gussmulde gegossen und an Umgebungsluft erstarrt. Nach Abkühlen auf Raumtemperatur und mechanischem Entfernen des Siliciums aus der Mulde wurden Masse und Reinheit des erhaltenen technischen Siliciums bestimmt. Ab einer Masse von 20 kg und einer Reinheit von 80 Masse-% ist das Verfahren wirtschaftlich.

Die chemische Zusammensetzung des verwendeten Mediators: C (0,11 Masse-%), O (26,5 Masse-%), Al (7,31 Masse-%), Ca (18,9 Masse-%), Si (46,7 Masse-%); wobei der Anteil an metallischem Silicium ca. 36 Masse-% betrug. Der Rest von 0,48 Masse-% verteilte sich auf Fe, Ti, Cu, Mg, P, B, V, Cr, Mn sowie Ni. Der Massenanteil von metallischem Silicium in dem Siliciummetall-haltigen Material betrug im trockenen Zustand ca. 49 Masse-%.

Tabelle 1

| Versuch | Kennzahl K | m (Silicium) [kg] | Reinheit (Silicium) [Masse-%, Si] |
|---|---|---|---|
| 1 | 60 | 38 | 94 |
| 2 | 35 | 39 | 95 |
| 3 | 20 | 42 | 95 |
| 4 | 10 | 40 | 97 |
| 5 | 5 | 45 | 98 |
| 6 | 1 | 42 | 98 |
| 7 | 0,073 | 47 | 99 |
| 8 | 0, 064 | 35 | 99 |
| 9 | 0, 036 | 34 | 99 |
| 10 | 0, 009 | 28 | 99 |

Die Beispiele belegen, dass durch die Erfindung ein wirtschaftliches Verfahren bereitgestellt wurde, das die Herstellung von Silicium technischer Qualität (<99,9 Masse-% Si) ausgehend von Silicium-haltigen Ab- und/oder Nebenanfällen ermöglicht.

**Patentansprüche**

1. Verfahren zur Herstellung von technischem Silicium,

bei dem eine partikuläre Rohstoffmischung, die partikuläres Siliciummetall-haltiges Material und einen partikulären Mediator enthält, welcher mindestens eines der Elemente C, O, Al, Ca und Si enthält,
auf mindestens 1490 °C erhitzt wird, wobei sich eine flüssige Siliciummetall-Phase bildet,
und die flüssige Siliciummetall-Phase zum Erstarren gebracht wird,
wobei die partikuläre Rohstoffmischung durch eine Kennzahl K beschrieben ist, wobei K einen Wert von 0,000 bis 60 aufweist und wie folgt berechnet wird:

$$K = \frac{m(SiM) \cdot d50(SiM) + m(Med) \cdot d50(Med)}{m(SiM) + m(Med)} \cdot \varphi \qquad \text{(Gleichung 1)}$$

wobei

m(SiM) Masse des Siliciummetall-haltigen Materials in der Charge
m(Med) Masse des Mediators in der Rohstoffmischung
$d_{50,SiM}$ Partikelgröße (Durchmesser) bei 50% des Massendurchgangs der Sieblinie des Siliciummetall-haltigen Materials,
$d_{50,Med}$ Partikelgröße (Durchmesser) bei 50% des Massendurchgangs der Sieblinie des Mediators,
φ mittlere Porosität des Siliciummetall-haltigen Materials,

wobei das Silicium-haltige Material ohne weitere Reinigungsschritte verwendet wird,
wobei die Partikel des Siliciummetall-haltigen Materials eine mittlere Partikelgröße $d_{50,SiM}$ von 0,1 bis 100 mm aufweisen und wobei die Partikel des Mediators eine mittlere Partikelgröße $d_{50,Med}$ von 0,1 bis 100 mm aufweisen.

2. Verfahren nach Anspruch 1, bei dem das hergestellte technische Silicium einen Si-Gehalt von mindestens 90 Masse-% aufweist.

3. Verfahren nach einem oder mehreren der voranstehenden Ansprüche, bei dem die Partikel des Siliciummetall-haltigen Materials eine mittlere Porosität der Partikel von 0 bis 0,6, aufweisen.

4. Verfahren nach einem oder mehreren der voranstehenden Ansprüche, bei dem das Massenverhältnis m (Siliciummetall-haltiges Material) / m (Mediator) Werte von 0,1 bis 10 annimmt.

5. Verfahren nach einem oder mehreren der voranstehenden Ansprüche, bei dem es sich bei dem Siliciummetall-haltigen Material um Siliciumreste, die ausgewählt werden aus Nebenprodukten oder Abfällen der Silicium-herstellenden oder -verarbeitenden Industrien, handelt.

6. Verfahren nach einem oder mehreren der voranstehenden Ansprüche, bei dem die Partikelmischung der partikulären Rohstoffmischung so gewählt wird, sodass die mittlere Partikelgröße des Silicium-haltigen Materials $d_{50,SiM}$ größer ist als die mittlere Partikelgröße des Mediators $d_{50,Med}$.

7. Verfahren nach einem oder mehreren der voranstehenden Ansprüche, bei dem der partikuläre Mediator, die Elemente O, Si und Ca enthält.

## Claims

1. Method for producing technical silicon,

wherein a particulate raw material mixture comprising particulate silicon metal-containing material and comprising a particulate mediator which comprises at least one of the elements C, O, Al, Ca and Si
is heated to at least 1490°C, with formation of a liquid silicon metal phase,
and the liquid silicon metal phase is brought to solidification,
the particulate raw material mixture being described by a characteristic number K, K having a value of 0.000 to 60 and being calculated as follows:

$$K = \frac{m(SiM) \cdot d50(SiM) + m(Med) \cdot d50(Med)}{m(SiM) + m(Med)} \cdot \varphi \qquad \text{(equation 1)}$$

where

m(SiM) is the mass of the silicon metal-containing material in the batch
m(Med) is the mass of the mediator in the raw material mixture
$d_{50,SiM}$ is the particle size (diameter) at 50% of the mass undersize of the grading curve of the silicon metal-containing material,
$d_{50,Med}$ is the particle size (diameter) at 50% of the mass undersize of the grading curve of the mediator,
$\varphi$ is the mean porosity of the silicon metal-containing material,
where the silicon-containing material is used without further purification steps,
where the particles of the silicon metal-containing material have a mean particle size $d_{50,SiM}$ of 0.1 to 100 mm
and where the particles of the mediator have a mean particle size $d_{50,Med}$ of 0.1 to 100 mm.

2. Method according to Claim 1, wherein the technical silicon produced has an Si content of at least 90% by mass.

3. Method according to one or more of the preceding claims, wherein the particles of the silicon metal-containing material have a mean particle porosity of 0 to 0.6.

4. Method according to one or more of the preceding claims, wherein the mass ratio m (silicon metal-containing material) / m (mediator) adopts values of 0.1 to 10.

5. Method according to one or more of the preceding claims, wherein the silicon metal-containing material comprises silicon residues selected from byproducts or wastes of the silicon-producing or silicon-processing industries.

6. Method according to one or more of the preceding claims, wherein the particle mixture of the particulate raw material mixture is selected such that the mean particle size of the silicon-containing material $d_{50,SiM}$ is greater than the mean particle size of the mediator $d_{50,Med}$.

7. Method according to one or more of the preceding claims, wherein the particulate mediator comprises the elements O, Si and Ca.

**Revendications**

1. Procédé de production de silicium technique,

dans lequel un mélange de matières premières particulaires qui contient une matière particulaire renfermant du silicium métal et un médiateur particulaire renfermant au moins un des éléments C, O, Al, Ca et Si, est chauffé à au moins 1 490 °C, ce qui forme une phase de silicium métal liquide,
et la phase de silicium métal liquide est amenée à solidification,
le mélange de matières premières particulaires étant décrit par l'indice K, K présentant une valeur de 0,000 à 60 et étant calculé comme suit :

$$K = \frac{m(SiM) \cdot d50(SiM) + m(Med) \cdot d50(Med)}{m(SiM) + m(Med)} \cdot \varphi \qquad \text{(équation 1)}$$

dans laquelle

m(SiM) désigne la masse de la matière renfermant du silicium métal dans la charge
m(Med) désigne la masse du médiateur dans le mélange de matières premières
$d_{50,Sim}$ désigne la granulométrie (diamètre) à 50 % du tamisat cumulé sur la courbe granulométrique de la matière renfermant du silicium métal,
$d_{50,Med}$ désigne la granulométrie (diamètre) à 50 % du tamisat cumulé sur la courbe granulométrique du médiateur,
$\varphi$ désigne la porosité moyenne de la matière renfermant du silicium métal,
dans lequel la matière renfermant du silicium est utilisée sans autre étape de nettoyage,
dans lequel les particules de matière renfermant du silicium métal présentent une granulométrie $d_{50,SiM}$ moyenne de 0,1 à 100 mm et dans lequel les particules de médiateur présentent une granulométrie $d_{50,Med}$ moyenne de 0,1 à 100 mm.

2. Procédé selon la revendication 1, dans lequel le silicium technique produit présente une teneur en Si d'au moins 90 % en masse.

3. Procédé selon une ou plusieurs des revendications précédentes, dans lequel les particules de matière renfermant du silicium métal présentent une porosité moyenne des particules de 0 à 0,6.

4. Procédé selon une ou plusieurs des revendications précédentes, dans lequel le rapport en masse m (matière renfermant du silicium métal) / m (médiateur) atteint des valeurs de 0,1 à 10.

5. Procédé selon une ou plusieurs des revendications précédentes, dans lequel la matière renfermant du silicium métal est composée de résidus de silicium qui sont choisis parmi les sous-produits ou les déchets des industries de production ou de transformation du silicium.

6. Procédé selon une ou plusieurs des revendications précédentes, dans lequel le mélange de particules du mélange de matières premières particulaires est choisi de sorte que la granulométrie moyenne de la matière renfermant du silicium $d_{50,SiM}$ est supérieure à la granulométrie moyenne du médiateur $d_{50,MeD}$.

7. Procédé selon une ou plusieurs des revendications précédentes, dans lequel le médiateur particulaire contient les éléments O, Si et Ca.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 109052407 A
- EP 0699625 A1